# EUROPEAN PATENT APPLICATION

(11) **EP 3 284 801 A1**
(43) Date of publication of application: **21.02.2018**
(21) Application number: 16185053.2
(22) Date of filing: 19.08.2016
(51) Int. Cl.: C09K 9/02

(54) **LIGANDS, ELECTROCHROMIC METALLO-POLYMERS OBTAINED THEREWITH AND THEIR USE**

(71) Applicant: Julius-Maximilians-Universität Würzburg, 97070 Würzburg (DE)
(72) Inventor: Kurth, Dirk, 63739 Aschaffenburg (DE); Pai, Sandesh, 97072 Würzburg (IN)
(74) Representative: Leißler-Gerstl, Gabriele

(57) **Abstract**

Disclosed are ligands comprising a spacer and two tridentate groups having structural formula I:

T¹-B-T²

wherein B is a bond or a linear linking unit (L)ₘ, and wherein T1 and T2 are pyrimidine comprising tridentate groups; metallo-polymers comprising these ligands and the use thereof.

## Description

### FIELD OF THE INVENTION

The present invention is concerned with electrochromic ligands, electrochromic metallopolymers comprising these ligands, substrates coated with this electrochromic metallo-polymer, the use of the ligands and electrochromic polymers in electrochromic applications and processes for producing the metallo-polymers and the substrates.

### BACKGROUND

Electrochromism results from the change of electronic absorption upon switching between redox states by application of an electrical voltage. Electrochromic materials (ECMs) have received attention due to the potential for commercial applications. Electrochromic materials can be used as coatings for anti-glare mirrors and glasses, protective eyewear, smart windows for automobiles and buildings, as well as electronic paper. Different types of materials have been investigated as electrochromic material, including metal oxides, e.g. nickel oxide or niobium oxide (TYPE I), transition metal complexes, e.g. prussian blue (TYPE II), organic materials like conducting polymers, and viologens, e.g. polyaniline or 3,4-((ethylenedioxy)thiophene) (TYPE III). The known materials suffer from low-switching speeds, high redox potentials, irreversibility of oxidation, toxicity, poor stability, low conductivity, and/or also from time and cost consuming processes for producing them and depositing them on a substrate. Moreover, the number of color tones that are available and the color intensity are not sufficient. The potential for modulations is low or not existing for known materials.

Recently an alternative electrochromic material has been developed, which is based on metallo-supramolecular coordination polyelectrolytes (MEPEs, TYPE IV), which has promising properties in terms of reversibility, performance and process efficiency. MEPEs are synthesized by metal ion induced self-assembly of organic ditopic ligands, typically based on terpyridine receptors that provide high binding constants and a well-defined coordination geometry. A number of MEPEs have been investigated based on redox metal ions such as Fe, Ru, Co, Ni, Zn, Cu, Pt and ligands such as 1,4-bis(2,2':6'2'-ter-pyridine-4'-yl)benzene (BTPY) (see for example Hahn, F.S. et al., Han, F. S.; Higuchi, M.; Kurth, D. G. Adv. Mater. 2007, 19, 3928; Han, F. S.; Higuchi, M.; Kurth, D. G. J. Am. Chem. Soc. 2008, 130, 2073; Schott, M.; Lorrmann, H.; Szczerba, W.; Beck, M.; Kurth, D. G. Solar Energy Materials and Solar Cells 2014, 126, 68)

Although BTPY ligands are superior to other types of electrochromic ligands, there is still a need for electrochromic ligands and electrochromic metallo-polymers that have a potential for modulation, that provide high color intensity and that can be produced in an easy manner. As an example, up to now it was not possible to provide electrochromic metallo-polymer coatings with the deep-blue color of the sky. As electrochromic metallo-polymers are often used as anti-glare coatings, it is desirable to provide them in a natural color such as deep-blue to provide the observer with a pleasant impression.

WO 2010 0 343 304 describes organic electronic components and a method for the production thereof, wherein the electron-conducting layer can be obtained by evaporating a metal complex together with an organic compound, wherein the organic compound comprising a metal selected from Cr, Mo or W, is an amorphous metallo-polymer ECM with N-heterocyclic ligands. These ECMs are coated on a substrate by chemical vapor deposition. The disadvantage of this material is that the amorphous structure does not lead to a regular and defect-free surface. Thus, the color intensity is not uniform and cannot be modulated selectively. The absorption characteristics of the amorphous layer cannot be adapted. In addition, chemical vapor deposition does not provide a surface coating in a homogeneous and reproducible manner. The materials disclosed in this document cannot provide natural colors like sky-blue. Another disadvantage of the materials described in this document is that a vapor deposition procedure is necessary which is very costly. The amorphous structure also results in a high redox potential which limits the applicability.

J.R. Reynolds et al. [Displays 27 (2006) 2-18] report about electropolymerization of complex transition metal monomers on a surface to produce metallo-polymeric ECMs. Electropolymerization is a cost-intensive technique, especially when large surfaces have to be coated. The process is difficult to control and leads to non-uniform coatings. In general the deposited metallo-polymers have high redox potentials of >1.5 V or even have irreversible redox properties. A modulation of absorption, wavelength and/or shade or is not possible.

D.G. Kurth et al. [Adv. Mater. 19 (2007) 3927-3931] disclose MEPEs (TYPE IV ECMs) which have been obtained by self-assembly of Fe²⁺ or Co²⁺ and substituted or unsubstituted ditopic bis-terpyridine ligands. Although these MEPEs have advantages compared to electrochromic materials of types I, II, or III, there are still some improvements desirable. For example some desirable shades are not available with these MEPEs. Moreover, the MEPEs described in this document are deposited by casting a low concentrated MEPE methanol solution (0.5 mmol I⁻¹) on a substrate, followed by evaporation of the solvent. This is a time consuming method and it is desirable to provide MEPEs that can be applied with simpler processes.

It was an object of the present invention to provide a ligand which can be used to prepare electrochromic metallo-polymers. Moreover, it was an object of the present invention to provide electrochromic metallo-polymers that have a low redox potential of <1.5 V, a high redox stability, fast switching rates, that are not toxic, provide a good redox reversibility, are soluble in water and/or polar solvents and provide a homogenous solution that can be applied in an economical way and yield films of high quality. It was also an object of the present invention to provide electrochromic coatings in desirable shades like deep blue.

Furthermore, it was an object of the present invention to provide electrochromic metallopolymers that can be used in simple and efficient application methods, like dip coating, resulting in coatings having high optical quality and variable absorption spectra at desirable wavelengths where color intensity and shade can be adapted and at the same time have good adhesive properties. Furthermore, it was an object of the present invention to provide a process for preparing electrochromic metallo-polymers in an economical way. It was another object to provide electrochromic components that can be used for coating building material and/or for anti-glare and camouflage applications, that can be prepared in an economical way.

These problems are solved by the ligands, metallo-polymers, and substrates of the present invention.

The present invention provides a ditopic ligand having very valuable properties, which can be used for self-assembly of electrochromic metallo-polymers when combined with metal ions. Substrates like transparent material or building material can be coated with these metallo-polymers and transparency and/or shade can be modulated by applying low voltage.

It was found that the ditopic ligand of the present invention when contacted with metal ions can form long linear electrochromic metallo-polymer chains which are stable because of the ligand's specific topology with a large delocalized *π* surface bridging adjacent metal ions. The important parts are a rigid spacer and two pyrimidine based tridentate groups connected by the spacer which form stable metal complexes. This results in a red shift of the dominant MLCT bands of the MEPEs displaying distinct deep-blue, dark-green and wine-red colors for metal-containing MEPEs with high extinction coefficient. The design of the ligand offers the possibility to tune the optoelectronic and electrochromic properties of metallo-supramolecular polymers. The properties can be varied by using different substituents and by the selection of the metals used. Thus, these ligands are highly valuable.

Straight rigid bis-pyrimidine ligands give rise to linear rigid-rod type macromolecular assemblies that are soluble in aqueous solutions and polar solvents like alcohols. Redox dependent transitions in the visible region of the electromagnetic spectrum such as d-d transitions, metal-to-ligand charge transfer (MLCT) and intervalence charge transfer (IVCT) give rise to rich electrochromic properties.

A ligand of the present invention has a structure according to the following formula I

T¹ -B- T²

wherein B is a bond or a linear linker group unit (L)ₘ
m is an integer of 1 to 4, preferably 1 or 2;
T¹ is a group of the following formula IIa and 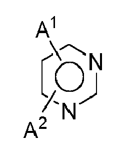
T² is a group of the following formula IIb 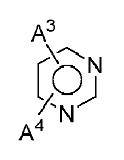
wherein T¹and T² are the same or different and wherein
A¹, A², A³, and A⁴ are independently 5- or 6-membered N-heteroaromatic rings, wherein each ring independently is unsubstituted or substituted by C₁-C₄ alkyl, OH, C₁-C₄ alkoxy, sulfanyl, NR₂, wherein R independently is hydrogen or C₁-C₄ alkyl; halogen, aryl or heteroaryl.

Thus, the ligand comprises a spacer and two tridentate groups. The spacer B is either a bond or a linear linker group. The function of the spacer is to connect two tridentate groups and to provide for a rigid connection and thereby allow to prepare linear MEPE polymers having desirable length. The rigid connection allows to prepare Thus, the spacer can be either a bond or a linear group that forms a rigid bridge, preferably contributes to the π-system and allows only longitudinal rotations. The term "linear linker group" when used for a spacer of a ligand of the present invention refers to groups that provide for a linear connection of the two tridentate groups, for example a bond, an alkyl chain, 1,4-bonded phenyl etc. Examples are alkyl, alkenyl, alkinyl, alkyl ether or alkyl ester groups having preferably 1 to 10 carbon atoms, such as 1 to 6 caqrbon atoms, aryl or heteroaryl groups. Examples for aryl are phenyl, biphenyl, naphthyl, examples for heteroaryl are thiophene, bithiophene, pyridine, imidazole. The spacer can carry substituents as long as the linear structure is not interrupted or disturbed. The spacer can have substituents like C₁-C₄ alkyl, C₅-C₁₂ aryl, 5 or 6 membered heteroaryl, but is preferably unsubstituted. Good results are obtained when using phenyl, in particular 1,4-phenyl; biphenyl, acetylene, thiophene, bithiophene, mono- or polyglycol groups as spacer. Preferred linear rigid groups, are phenyl, biphenyl, thiophene, bithiophene. The spacer should not be too long as this might dilute the effective groups. Double bonds, bulky groups and/or functional groups in the spacer can have an influence on solubility and stability of the molecule and of the resulting polymer and should be introduced only when a specific effect is desired..

The spacer when being part of the π-system has an influence on the shade and intensity of the color and can also contribute fluorescence, for example by the use of thiophene rings. It has been found that phenyl or biphenyl or one or two thiophene rings can provide for very intense deep-blue, dark-green or wine-red colors. Furthermore, it has been found that bithiophene as spacer can yield fluorescent metallo-polymers.

In one embodiment, spacers are used that provide for a linear connection to both tridentate units in an angle of about 180° as this enables the formation of long chains and, thus, high molecular masses when the ligands are combined with metal ions. It has been found that in particular 1,4-phenyl or bithiophene groups used as spacer provide for a rigid topography that allows to obtain long metallo-polymer chains.

The spacer can be used to modulate properties of the ligand and of a resulting metallo-polymer. The ligands can be used in a modular system for preparing metallo-polymers with adjustable properties, by providing ligands with different properties that can be assembled to polymers. The length of the spacer has an influence on the distance between chromophores in the metallo-polymer and, thereby, on the absorption and extinction coefficient. If a polymer having high chromophore density, is desired, the spacer should be just a bond or a short group, if a lower chromophore density and a lower absorption is desired, a longer chain could be used as spacer. When the absorption is high very thin films can be applied to provide for satisfying electrochromic properties. Thin films allow for short switching times and low voltage. When the absorption is lower, films have to be thicker but processing might be simpler. It is routine for the skilled person to find the best compromise for each application with the present disclosure.

The second important part of the ligand are two pyrimidine based tridentate groups. Each tridentate group comprises one pyrimidine ring that is substituted with two N-heteroaromatic rings, and the pyrimidine ring in the center is connected with the spacer. It has been surprisingly found that pyrimidine is ideally suited to provide for formation of stable linear complexes with metal ions and at the same time provides for a color shift such that color shades can be obtained that were not obtainable until now. It is important that the central group of the tridentate is a pyrimidine ring. The pyrimidine ring can be bound with the spacer at any possible ring position. However, it has been found that the best results are obtained when the bond to the spacer is in position 4 of the pyrimidine in relation to one of both nitrogen atoms because this allows an optimal interaction with a metal atom as described below. Surprisingly, it has been found that optimal results are obtained with an aromatic ring as spacer carrying at least one hydrogen adjacent to the tridentate-spacer-bond. Without being bound by theory it is assumed that a hydrogen of the aromatic ring and the second nitrogen in the pyrimidine ring provide for a stabilisation of the ligand-metal-complex by a hydrogen bridge, which provides for longer chains, high extinction coefficient and an optimal difference of anodic/cathodic peak potential which results in an increase of the number of switching cycles.

Each of the two pyrimidine rings carries two N-heteroaromatic rings A¹ and A², and A³ and A⁴ respectively. The four N-heteroaromatic rings can be the same or can be different, for example all 4 can be the same or A¹ and A³ can be the same and A² and A⁴ can be the same but different from A¹ and A³ and so forth. The N-heteroaromatic rings can be bound at any free carbon atom of the pyrimidine ring. The best results are obtained when in both groups the two N-heteroaromatic rings are bound in ortho-position on both sides of the nitrogen atom in position 1. This provides three active sites for complex formation with the metal ion. When in both tridentate groups the N-heteroaromatic rings are in positions 2 and 6 and the spacer is bound in position 4, the complex is in a form that will easily self-assemble to long polymer chains because of the optimal angles that are built.

An "N-heteroaromatic ring" as defined in the present application, is a 5- or 6-membered ring which comprises at least one nitrogen atom but can comprise further heteroatoms selected from O, S, and N, such as one or two and up to three additional heteroatoms. A preferred N-heteroaromatic ring is pyridine. The N-heteroaromatic ring can be unsubstituted or substitued. A substituent for the N-heteroaromatic ring can be any group that contributes a function or property without disturbing the complex formation.

"Heteroaryl" defines a 5- or 6-membered ring which comprises at least one and up to 3 heteroatoms selected from O, S, and N, and which can additionally comprise one or two fused aromatic rings. An example for heteroaryl is benzimidazole.

N-heteroaromatic rings can be unsubstituted or substituted as defined above. The substituents of the N-heteroaromatic rings can be small or bulky groups, electron-donating groups or electron-withdrawing groups dependent on the desired properties. Thus, an N-heteroaromatic ring can be substituted with an electron-donating group like alkyl or alkoxy, or with an electron-withdrawing group like halogen. Moreover, an amino substituent can add to the delocalized electron cloud. The amino group can be unsubstituted or substituted by one or two C₁-C₄ alkyl or aryl or heteroaryl groups. The N-heteroaromatic rings can also comprise sterically hindered or bulky groups or electron-rich groups which interfere with complex formation and thus, also have an influence on the color of the complex. Benzimidazole is one example for such a substituent. It is one advantage of the ligands of the present invention that properties of the ligand and, thus, the metallo-polymer, can be modulated or fine-tuned to obtain desirable properties.

The number of substituents and the type of substituents can be chosen such that the ligand has optimal properties. Any number of substituents that is possible can be used with the proviso that the substituent shall not disturb the conformation of the whole molecule in a way that the complexation with the metal atom is undesirably hindered or interfered.

Substituents that sterically favor interactions can also be used to adapt optical properties, like benzimidazole. In general, the ligand of the present invention offers many options for adapting optical properties and redox potential by using substituents. Depending on the position of a substituent it can interfere with the coordination of a metal ion or can foster it.

It has been found that ligands, wherein the spacer is not bound in position 4 and/or the heteroaromatic rings A are not bound in positions 2 and 6 can also result in ligands having interesting properties. However, with such ligands usually no long chains can be obtained but only cyclic constructs which cannot form films but need a polymeric matrix for film building. Polymers for building such films are well-known and can be used here, an example is a functionalised silane. Such a film built within a polymeric matrix can have interesting properties and, therefore, is also part of the present invention.

Particularly useful are ligands that have the following structure according to formula III: 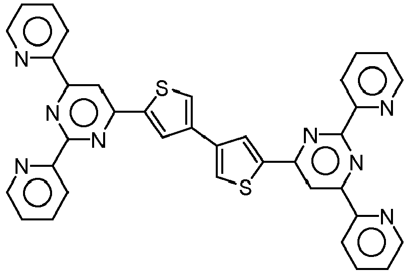 or according to formula IV

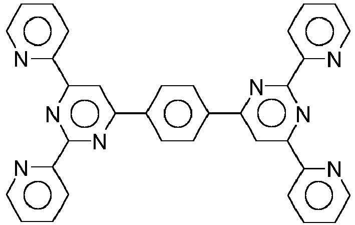

The ligands of the present invention are very valuable compounds which react with metal ions to form metallo complex units or electrochromic metallo-polymers, respectively. It has been found that the ligands are ideal for complexation with metal ions and can form long chains because of the very structure which combines a rigid spacer with two tridentate groups. A metallo-polymer, thus, comprises at least one ligand of the present invention, preferably at least one ligand-metal-unit, also referred to as electrochromic unit, combining a ligand and a metal ion, and in particular is comprised of electrochromic units of the present invention. The chains can be formed from identical ligands and identical metal ions, i.e. identical repeating units, or from mixtures of ligands and/or mixtures of metal ions. The specific combination can be chosen by a skilled person depending on the properties desired for the metallo-polymer. It is also possible to "assemble" only one ligand with one metal ion to build a mono-ligand-metal-complex.

The present invention also provides ligand-metal-units, of which an electrochromic metallo-polymer is comprised. Units of a preferred metallo-polymer of the present invention can be represented by the following formula V: 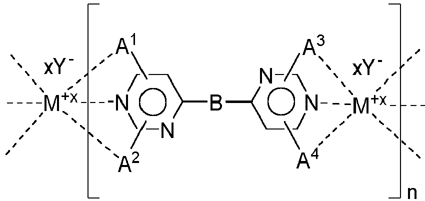 wherein A¹, A², A³, A⁴, B, M, Y, and x are as defined above and in the claims and wherein n is the number of units in a chain and can be at least 1, such as 2 or more. The chain can have thousands of units or more, for example 1-100,000 units.

Mono ligand-metal-complexes as defined above can be used for preparing electrochromic films in a matrix system.

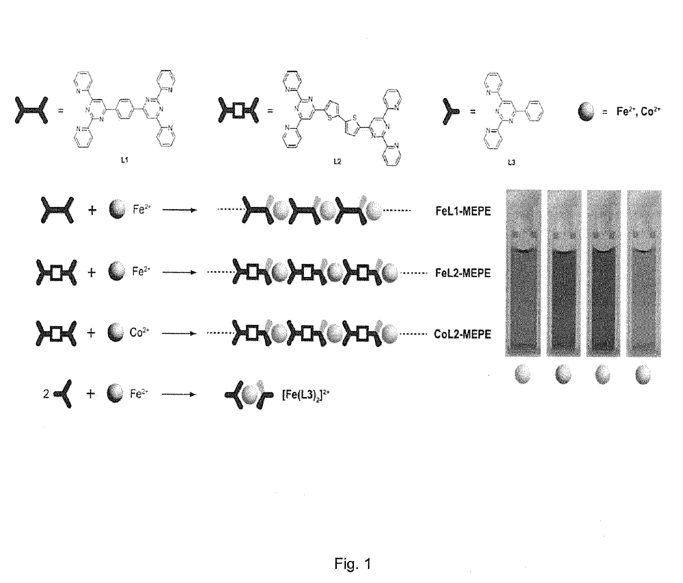

The ligand-metal-units of formula V are particularly useful as units of a metallo-polymer chain having a structure as shown in Figure 1. Because of the very structure of the ligand, long chains can form. Without being bound by theory it is assumed that this is due to specific interactions between electrons of pyrimidine nitrogens and hydrogens of spacer elements. With the ligands of the present invention it is possible to prepare metallo-polymers having a molecular mass of the polymer in the range of 10³ to 10¹² g mol⁻¹, such as 10⁵ to 10¹⁰ g mol⁻¹ and more preferably 10⁶ to 10⁹ g mol⁻¹.

The metal ion used in the metallo-polymer can be any metal ion that is able to form preferably octahedral complexes. Generally suitable are for example metals selected from Fe, Co, Ni, Cr, Mo, Pt, Zn, Cu, W, Mn, V, Ru, Os, La, or lanthanoids. It is preferred to use only those metals that are not toxic. Surprisingly it is possible to prepare valuable polymers by using cheap metals like iron, cobalt, nickel or zinc. It is also possible to use ruthenium, osmium, lanthanum and lanthanoids. Chromium is less preferred because of its toxicity. Platinum is less preferred because of its high price. Most preferably Fe and/or Co are used which with the ligands of the present invention can yield polymers having desirable colors, high color intensity and at the same time are economically very interesting.

The following ligand-metal-units or metallo-polymers, respectively have been found useful: 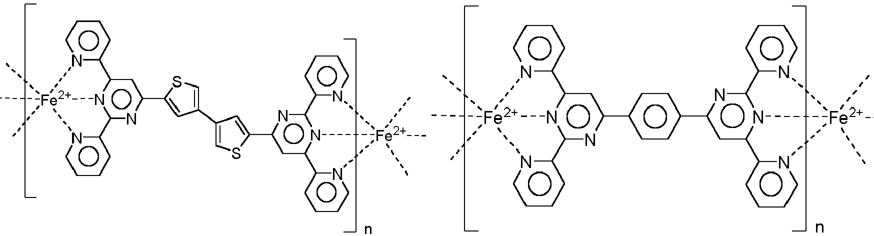 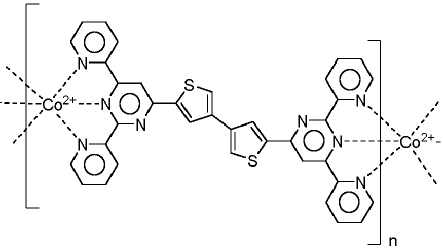 wherein n is at least 1 and can be any integer, such as 1-100,000.

Ligand-metal-units of the present invention, for example those shown above, can be combined statistically or blockwise. In one embodiment, a metallo-polymer consists of only one type of the above units.

For preparing the metallo-polymer a solution comprising metal ions is used, such as a salt solution. The metal in the polymer is charged, therefore a counter ion is also present. The counter ion can be any ion as long as it is soluble and does not precipitate the metal. Examples are anions like acetate, perchlorate or complex anions like gluconate, triflate, polyoxometallate clusters or amphiphilic anions like carboxylate, sulfonate, phosphonate head groups and long alkyl chains as well as polyelectrolytes.. It is also possible to use one type of counterion for the preparation of the metallo-polymer and exchange it partially or completely against another ion when the polymer has formed or when a substrate has been coated. For example, coating a substrate can be done using one type of counter ion which might enhance solubility, and it can be exchanged against an ion that is used in another layer, such as in the ion storage layer or in the electrolyte layer.

It is possible either to use one type of metal ion for a metallo-polymer or to use a mixture of two or more types of metal ions. The type of metal ion can be used to adapt the absorption and/or wavelength and/or extinction of the resulting electrochromic film. In one embodiment, one type of metal ions is used. In another embodiment a mixture of 2 or more different types of metal ions is used. When more than one type of metal ions is used, the different types can be used in similar amounts, for example about equimolar amounts, or in different molar percentages. One example for such an embodiment is the use of Fe and Co in a molar ratio of about 1:2 to 2:1. In another embodiment a metallo-polymer is prepared by using a higher percentage of one type of metal and adding one or more further metals in minor amounts to adapt the color shade and/or color intensity. As an example, a metallo-polymer can be prepared comprising about 80 to about 99 mol-% of one metal ion, preferably selected from Fe or Co, and about 20 to about 1 mol-% mixture of one or more metals selected from Fe, Co, Ni, Cr, Mo, Pt, Zn, Cu, W, Mn, V, Ru, Os, La, or lanthanoids.

Using two or more types of metal ions allows to provide an electrochromic film which can change between different colors/shades and to adapt the voltage necessary for switching between different electrochromic states/colors. Thus, a film can be provided which changes not only from transparent to colored but from transparent to one color to another color and so forth. This embodiment can also be used for chameleon-type coatings.

The ligands and metallo-polymers of the present invention provide many options because of their variability and modularity. Redox potential, absorption, wavelength and other optical and electronic properties can be varied by selecting the structure of the ligand and/or by selecting substituents for the spacer and the N-heteroaromatic rings. Electron donating groups and electron withdrawing groups can be used to change the π system and thereby the redox potential, the difference between the cathodic and anionic peak potential and/or the color, or other characteristics.

The substituents also have an influence on the viscosity of a solution of the metallo-polymer. Depending on the substituents used, the viscosity of a solution of the metallo-polymer can be adapted. This is valuable for processing the ligands and polymers of the present invention. Solutions having a suitable viscosity can be processed in a simple manner, i.e. can be applied with methods like dip-coating or spin-coating. Viscosity is also dependent on solvent and concentration of solute and it is another advantage of the ligands and the metallo-polymers of the present invention that they can be dissolved in polar solvents in an amount that is suitable for coating processes. It has been found that viscosity can also be influenced by the chain length of the metallo-polymer and the structure of the ligands. The chain length of the metallo-polymer, among others, is dependent on the structure of the ligands, the type of substituents in the ligand and the ratio of ligands and metal ions. Thus, the ligands of the present invention provide high versatility and modularity.

It is a further important property of the ligands of the present invention that they allow to obtain very long metallo-polymer chains. When ligands of the present invention are combined with metal ions, for example a solution of a metal salt, a self-assembly of metallo-polymers takes place. The best results are obtained when a stoichiometric or equimolar ratio of the reactants is applied. An equimolar ratio can for example be applied by using conductometric titration for combining metal ions and ligands of the present invention, as the conductivity of the solution is a function of stoichiometry, *y* = [M]/[L], e.g. the ratio of the concentration of the metal ion and the ligand.. As can be seen in the examples, it is possible to obtain molar masses in a range that was not obtainable with ligands of the prior art.

Furthermore, the redox potential of the metallo-polymers of the present invention is very low. This allows to use very low voltage for switching from one electrochromic state to the other or from one color to the other color, respectively. Voltages of less than 1.5 Volt can be applied to an electrochromic film of the present invention for switching properties.

Another parameter which can be influenced by using the ligands of the present invention and their variability is the duration of the memory effect. An electrochromic element produced with the metallo-polymers of the present invention is coated on a substrate and has a specific color tone and color intensity. This can be changed by applying a voltage of less than 1.5 Volt which for example changes the film to a transparent film by oxidation of the metal, for example iron. After one application of voltage the film will change to its transparent state. This state will remain for some time, i.e. the memory period. The film will then switch back faster or slower, depending on the memory and the environment, to its original state and can be made transparent again by applying another pulse. In other words, whenever a potential is applied, the transparent, uncolored or activated state is obtained which remains for some time.

The metallo-polymers of the present invention are applied to substrates and can form electrochromic films. The films can be applied by simple methods like dip-coating or spin-coating. The film thickness depends on the ligands and metals used and on the properties desired for the coated substrate. As the metallo-polymer of the present invention allows to produce very thin films, the voltage necessary to switch from one state to the other can be very low. For example, films can be produced with a thickness in the range of about 100 nm, which requires only very low voltage for the change. As outlined above, by using mixtures of metal ions films can be provided having more than two states which can be addressed by using selective voltages.

The film thickness can be in a broad range from about 100 nm to about 1 mm, such as 250 nm to 100 µm. Thinner films have lower switching time and need lower voltage, but their preparation is more sophisticated, whereas thicker films are easy to apply, but need higher voltage and/or more time for switching. Optimal parameters can be found for each application by routine tests.

The ligands of the present invention allow for modulation of properties of the metall-polymer obtained. For preparing the metallo-polymers, only one type of ligand or a mixture can be used. By selecting the optimal ligand(s) the properties of metallo-polymers and the electrochromic layers obtained therewith, can be adapted and fine-tuned. For example ligands allowing the formation of very long chains can be combined with ligands that form shorter chains but contribute valuable properties. The ligands or metallo-polymer-chains, respectively, of the present invention can also be used in combination with polymers known in the art, for example to modulate properties of electrochromic films. Furthermore, ligands, ligand-metal-units, or metallo-polymer chains of the present invention can be part of 3D polymers as described by Hu et al. (Appl. Mater. Interfaces 2014, 6, 9118-9125), for example as chains of a 3D molecule. In other words one or more chains of a three-dimensional polymer can be formed from ligands of the present invention.

The ligands of the present invention can be prepared by methods known in the art. One suitable method is described in the examples and schematically shown in Scheme 1. For example, a ligand according to the present invention can be prepared by
aldol condensation of a diacetyl derivate of -(L)ₘ- with carboxyaldehyde derivates of A¹ and A³; or
cycloaddition and condensation of a carboximidamide derivate of A² with a dienone derivate of A⁴ and cycloaddition and condensation of a carboximidamide derivate of A¹ with a dienone derivate of A², and
finally condensation of the product of the aldol condensation with carboximidamide derivates of A² and A⁴; or
coupling of the products of the cycloaddition and condensation by a di-SnBu₃-substituted derivate of -(L)ₘ-.

Analogous methods can be used to prepare other ligands accordingly.

The metallo-polymers of the present invention can be used to coat substrates, such as transparent substrates, to provide an electrochromic layer. Coating of subtstrates with the metallo-polymers of the present invention can be done with any coating method. Preferably, for coating a solution of one or more metallo-polymers of the present invention is used. One advantage of the metallo-polymers of the present invention is their stability in solution and in the final layer. The metallo-polymers are stable in solution, i.e. they dissolve in polar solvents, such as water, alcohols, acetone, acetonitrile or mixtures thereof, and do not precipitate. These solutions allow for application by methods like dip coating or spin coating and for drying by evaporation without using vacuum.

Coatings or layers of metallo-polymers of the present invention change color or transparency by application of voltage. In other words, switching from transparency or from one color to non-transparency or another color or vice versa can be achieved only by applying voltage. Therefore, in a preferred embodiment, the metallo-polymers of the present invention are used as part of a coated substrate which has the following composition: substrate/transparent electrode/electrochromic metallo-polymer (matrix)/electrolyte (gel, liquid/solid)/ion storage layer or electrochromic layer/transparent electrode/substrate.

Methods for preparation of electrochromic components and devices are well-known and can be used for preparing electrochromic components of the present invention as well, using metallo-polymers of the present invention.

The ion storage layer can be any layer that can store and donate or accept ions. Moreover, the ion storage layer should be transparent. Examples are transparent conducting oxides that are well-known in the art. Examples are Indium oxide, zinc oxide and mixtures thereof.

The electrolyte can be any electrolyte used for electronic components. Examples are metal salts as used in batteries, such as sodium chloride. In particular suitable is lithium perchlorate. The electrolyte can be in liquid or solid form or can be gel-like,

An electrochromic component of the present invention has favorable properties: it is very stable, allows at least 100,000 switch cycles, has a low redox potential and a high absorbance or extinction coefficient respectively.
Therefore, another subject of the present invention is an electrochromic component comprising at least one substrate; at least one ion storage layer; at least one electrochromic metallo-polymer; and an electrolyte. In one embodiment an electrochromic component of the present invention comprises the following layers in sequence:
transparent or non-transparent substrate/ion storage layer/electochromic metallo-polymer/electrolyte/ion storage layer.

Voltage for switching can be supplied by any known means, such as a battery or a solar cell. Switching can be done manually or regulated by one or more sensors.

The electrochromic metallo-polymer layer can either be a layer of a metallo-polymer of the present invention or a composite comprising metal complex units, mono-ligand-metal-complexes and/or metallo-polymer of the present invention embedded in a polymer-matrix, e.g. ormocer, silane, polyethyleneglycol, polyvinylalcohol and the like.

The metallo-polymer or electrochromic component can be used for many applications, where a change of color, shade, transparency is useful or necessary. Examples for the use are surfaces of buildings, windows, so-called smart windows, car glass, eye-wear, where change of transparency is important, or objects where camouflage or adaptation to the environment is important, for example military or artistic objects.

The use of ligands, polymers, MEPEs of the present invention helps to save energy and is environmetally friendly. By adapting transparency, a component or polymer of the present invention can be used to fast react on environmental conditions and to change from transparent state where electronic radiation can enter and provide light and heat to the intransparent state where a part of electronic radiation is hindered to enter and, thus, reduces or eliminates the necessity for air-condition and nevertheless allows to use visible light as long as possible.

### EXAMPLES AND FIGURES

The invention is also explained by the following figures and examples which are only for explanation but should not be deemed to be limiting.
Figure 1 shows an overview and the colors of the electrochromic metallo-polymer compounds FeL1-MEPE, FeL2-MEPE, FeL3-MEPE and [Fe(L3)₂]²⁺ (as a reference) obtained in example 1.
Figure 2a shows electronic absorption spectra of the ligands L1-L3 (in dichloromethane) obtained in example 1.
Figure 2b shows electronic absorption spectra of the electrochromic metallopolymers FeL1-MEPE, FeL2-MEPE, CoL2-MEPE, FeL3-MC (as a reference) obtained in example 1.
Figure 3a shows the normalized absorption (solid line) and fluorescence (dotted line) spectra of ligand L2 (obtained in example 1) in dichloromethane. The excitation wavelength *λ*_{exc} is at 413 nm.
Figure 3b shows the normalized absorption (solid line) and fluorescence (dotted line) spectra of FeL2-MEPE (obtained in example 1) in methanol. The excitation wavelength is at 420 nm.
Figure 3c shows the colors (photography) of L2, FeL2-MEPE and its fluorescence at an excitation wavelength of 365 nm in dichloromethane and methanol, respectively.
Figure 3d shows normalized fluorescence spectra of L2 in various solvents (*λ*_{exc} = 413 nm).
Figure 3e shows fluorescence decay curves of L2 in dichloromethane (*λ*_{exc} = 413 nm).
Figure 3f shows fluorescence decay curves of FeL2-MEPE in methanol (*λ*_{exc} = 420 nm).
Figure 4a shows dynamic and kinematic viscosity in water as a function of concentration of FeL1-MEPE.
Figure 4b shows dynamic and kinematic viscosity in water as a function of concentration of FeL1-MEPE and in the presence of a polyethylene oxide, commercially available as Polyox™ WSR N-80. For comparison, the viscosity of water and water with 1% polyethylene oxide is shown (grey line).
Figure 4c shows the time dependent viscosity in water of FeL1-MEPE at a concentration of 8 mmol l⁻¹.
Figure 4d shows the time dependent viscosity in water of FeL1-MEPE in the presence of 1% polyethylene oxide at a concentration of 8 mmol l⁻¹.
Figure 4e shows the viscosity of FeL2-MEPE in ethanol at different concentrations. The data on Y-axis at c = 0 mmol l⁻¹ represents the viscosity of ethanol.
Figure 4f shows the viscosity of CoL2-MEPE in water at different concentrations. The data on Y-axis at c = 0 mmol l⁻¹ represents the viscosity of ethanol.
Figure 5a shows scanning electron microscope (SEM) images of FeL2-MEPE film surfaces on ITO coated glass prepared by dip coating with a solution of 10, 12, 13 and 16 mmol l⁻¹ at a withdrawing speed of 50 mm min⁻¹ (A-D) and 100 mm min⁻¹ (E-H).
Figure 5b shows a photographic image of FeL1-MEPE (deep-blue, 30 mmol l⁻¹), FeL2-MEPE (dark-green, 14 mmol l⁻¹) and CoL2-MEPE (red, 14 mmol l⁻¹) films prepared by dip coating at a withdrawing speed of 100 mm min⁻¹ on indium tin oxide (ITO) coated glass (dimension 1.6 cm x 2.5 cm).
Figure 6 shows a plot of log *R*_{g} vs. log *M̅*_{w} of FeL1, CoL2 and FeL2-MEPE in water and ethanol, respectively, at a temperature of 23 °C according to eq. 2 of example 6. The slope represents the coefficient, *v*.
Figure 7a shows a cyclic voltammogram of an FeL1-MEPE film recorded at the conditions of example 7.
Figure 7b shows a cyclic voltammogram of an FeL2-MEPE film recorded at the conditions of example 7.
Figure 7c shows several voltamogram of an FeL2-MEPE film recorded at the conditions of example 7 with different scan rates.
Figure 7d shows voltammograms after 1 and 50 redox cycles at a scan rate of 20 mV s⁻¹ under the conditions of example 7.
Figure 7e shows the linear increase of the anodic and cathodic peak currents as a function of increased scan rate in FeL2-MEPE film under the conditions of example 7.
Figure 7f shows the difference of anodic and cathodic currents of FeL2-MEPE film as a function of the square root of the scan rate.
Figure 8a shows spectroelectrochemical measurements showing changes at visible wavelengths of FeL1-MEPE thin film coated on ITO-coated glass at the conditions of example 8 (oxidation).
Figure 8b shows spectroelectrochemical measurements showing changes at visible wavelengths of FeL1-MEPE thin film coated on ITO-coated glass at the conditions of example 8 (reduction).
Figure 8c shows spectroelectrochemical measurements showing changes at visible wavelengths of FeL2-MEPE thin film coated on ITO-coated glass at the conditions of example 8 (oxidation).
Figure 8d shows spectroelectrochemical measurements showing changes at visible wavelengths of FeL2-MEPE thin film coated on ITO-coated glass at the conditions of example 8 (reduction).

### EXAMPLE 1

### Synthesis of ligands and metallo-supramolecular coordination polyelectrolytes

Ligands of the present invention were synthesized using two condensation reactions, as can be seen in the below scheme 1. The process is explained in the following in more detail.

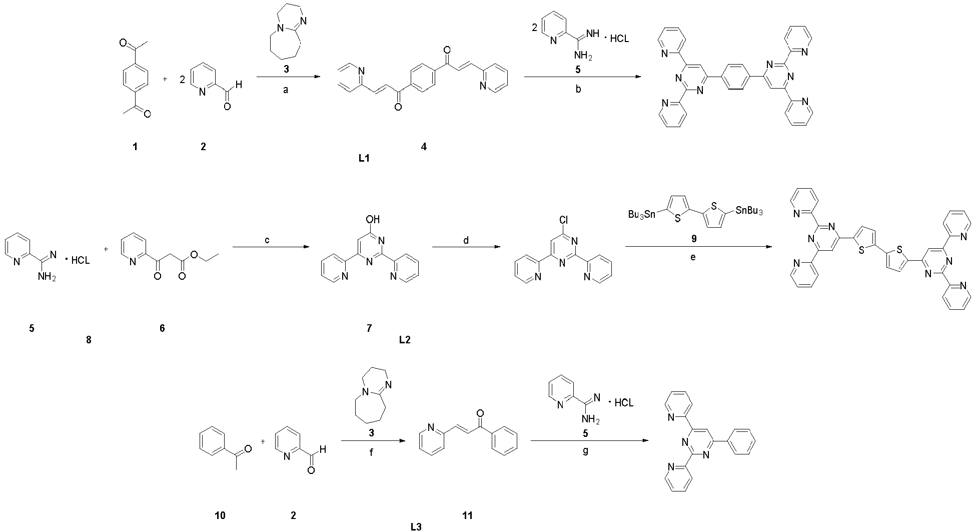

At first, dienone 4 was synthesized by aldol condensation of 1,4-diacetylbenzene and 2-pyridinecarboxaldhyde in the presence of an organic base, 1,8-diazabicyclo[5.4.0]undec-7-ene (DBU). The final condensation of the dienone with pyridine-2-carboximidamide hydrochloride 5 affords ligand L1 with a phenyl spacer (see Scheme 1). The DBU mediated condensation is useful as it does not form a Michael addition product due to the elimination of metal-containing inorganic bases such as KOH or NaOH.

Furthermore, the fluorescent ligand L2 comprising a 2,2'-bithiophene spacer is synthesized via Stille coupling of stannyl reagent 9 and 4-chloro-2,6-bis(2-pyridyl)pyrimidine 8. Compound 8 was synthesized by condensation of pyridine-2-carboximidamide hydrochloride 5 and β-keto ester 6 followed by chlorination in the presence of thionyl chloride, according to a method reported previously by Lafferty and Case (Lafferty, J.J. et al., J. Org. Chem. 1967, 32, 1991). Ligand L3 was synthesized by condensation of acetophenone and 2-pyridinecarboxaldhyde following the same protocol as that of L1 (as is shown in scheme 1).

MEPEs were produced in a reproducible manner by conductometric titration. The conductivity of the solution is a function of stoichiometry, *y* = [M]/[L], e.g. the ratio of the concentration of the metal ion and the ligand. An equimolar amount of ligand in 75% acetic acid was conductometrically titrated by a solution of metal acetate (Fe and Co) in 75% acetic acid, which resulted in a decrease of conductivity until a minimum at *y* = 1 was reached (Figure S1). Close to a stoichiometric ratio of 1:1 an increase in viscosity of the solution could be seen, indicating that the macromolecular species had formed.

The following nomenclature will be used in these examples:
FeL1-MEPE refers to Fe^{II} metal ion induced self-assembly of ligand L1,
FeL2-MEPE refers to the assembly of Fe^{II} and ligand L2,
CoL2-MEPE refers to an assembly of Co^{II} and ligand L2 (for synthesis see Scheme 1).

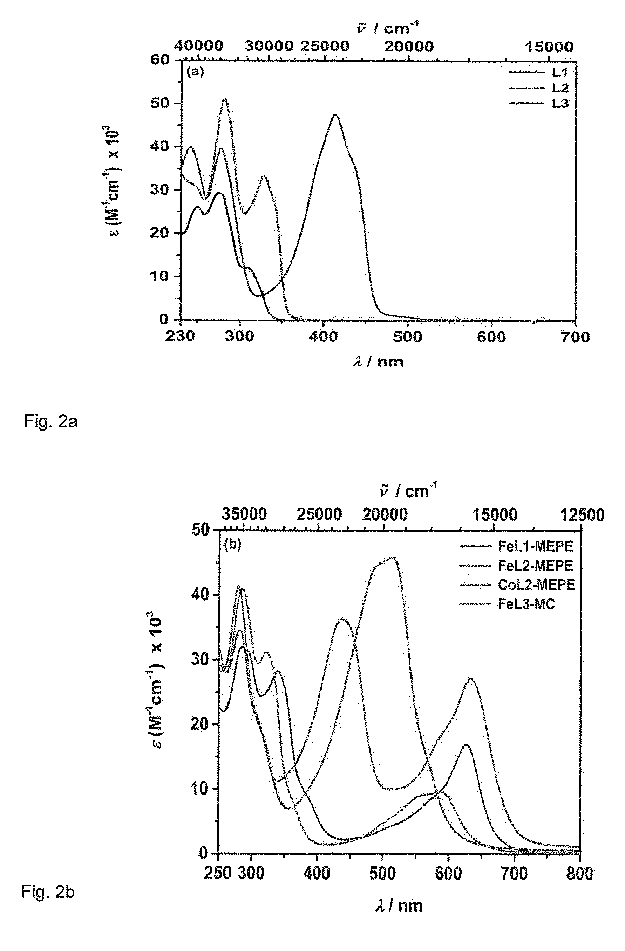

[Fe(L3)₂]²⁺ complex was also synthesized from Fe^{II} metal ion and ligand L3. In this combination it serves as a reference compound (see Figure 1). The optical properties of ligands L1, L2, and L3 and the corresponding Fe"- and Co^{II}-MEPEs, as well as the FeL3 metal complex were analyzed by UV-vis absorption spectroscopy. The electronic absorption spectra of the ligands and the corresponding MEPEs are shown in Figure 2 and the spectroscopic data with prominent absorption maxima are summarized in Table 1. While monotopic L3 and ditopic ligand L1 were off-white, ligand L2 containing a 2,2'-bithiophene spacer showed a distinct orange color. The redshift is apparent in the UV/vis spectra recorded in DCM solution. The absorption in the UV region (-250 nm and -280 nm) of the spectrum were due to the *π-π** and n-*π** transitions inherent to BPP. The dominant absorption at 413 nm is tentatively attributed to the thiophene-conjugated *π*-system of L2.

It was found that the UV-vis spectra of FeL1-, FeL2-, CoL2-MEPEs and FeL3 MC were dominated by MLCT (metal-to-ligand charge transfer) transitions, as is typical for Fe^{II} based MEPEs. The MEPEs disclosed herein, including the metal complex, showed absorption bands below 350 nm which were attributed to 2,6-bis(2-pyridyl)pyrimidine ligand's *π-π** transitions. An intense absorption band at around 630 nm was assigned to MLCT bands of FeL1 and FeL2-MEPE (Figure 2). FeL2-MEPE showed another strong absorption band at around 440 nm which was attributed to the *π-π** transition of the conjugated thiophene spacer.

On the other hand, CoL2-MEPE showed a distinct band centered at 510 nm. This band may be associated with a shift of the *π-π** transitions of the thiophene spacer, d-d, or an MLCT transition. This type of band has also been reported for other Co-MEPEs and Co-metal complexes.

FeL3 metal complex exhibits a characteristic absorption maximum centered at 585 nm due to the MLCT band. The absorption data of the previously reported Fe-MEPE based on BTPY ligand show a characteristic band similar to the FeL3 metal complex. An effect of the ligand structure on the optical properties of the resulting metallo-polymer is recognized by the distinct colors: The FeL1-MEPE is deep-blue, FeL2-MEPE is dark-green, CoL2-MEPE is wine-red, and FeL3 MC is purple in color.

The UV/vis spectroscopic properties of ligands L1, L2, and L3 and the corresponding Fe" and Co"-MEPEs are summarized in the following Table 1.

**Table 1. UV-Vis spectroscopic properties of ligands L1-L3^{a} and its corresponding Fe" and Co^{II}-MEPEs^{a}**

| entries | *π-π* λ*ₘₐₓ [nm]; ε_{λmax} [M⁻¹ cm⁻¹]*^{b}* | MLCT *λ*ₘₐₓ [nm]; ε_{λmax} [M⁻¹ cm⁻¹] | | | |
|---|---|---|---|---|---|
| | | H₂O | EtOH | MeOH | AcOH |
| **L₁** | 328 (34 100), 281 (52 530) | | | | - |
| **L₂** | 413 (53 200),*^{c}* 277 (44 500), 241 (44 850) | | | | - |
| **L₃** | 308 (11 850), 275 (28 800), 250 (25 600) | | | | - |
| **FeL₁- MEPE** | 340 (29 900), 285 (34 300) | 626 (18000) | 599 (15250) | 600 (13200) | 624 (18900) |
| **FeL₂- MEPE** | 437 (35 600),^{c} 279 (40 850) | - | 632 (26 800) | 631 (26 400) | 655 (29 600) |
| **CoL₂- MEPE** | 281 (34 900) | 510 (45700) | 457 (49200) | 466 (51 100) | 470 (46200) |
| **FeL₃-MC** | 321 (31 500), 285 (41 800) | 585(9700) | 586(8200) | 584(8400) | 585(9000) |

| | | | | | |
|---|---|---|---|---|---|
| *^{a}*Determined at room temperature. *^{b}*The *λ*ₘₐₓ and εₘₐₓ values refer to the *π-π** transition for the ligands **L1** (30 *µ*M), **L2** (25 *µ*M), **L3** (60 *µ*M) in DCM and **FeL1-MEPE** (60 *µ*M), **CoL2-MEPE** (25 *µ*M), **FeL3** metal complex (60 *µ*M) in water and **FeL2-MEPE** (40 *µ*M) in ethanol. *^{c}*The *λ*ₘₐₓ and εₘₐₓ value represents the transition from the thiophene conjugated *π*-system in ligand **L2** and **FeL2 MEPE.** | | | | | |

### EXAMPLE 2

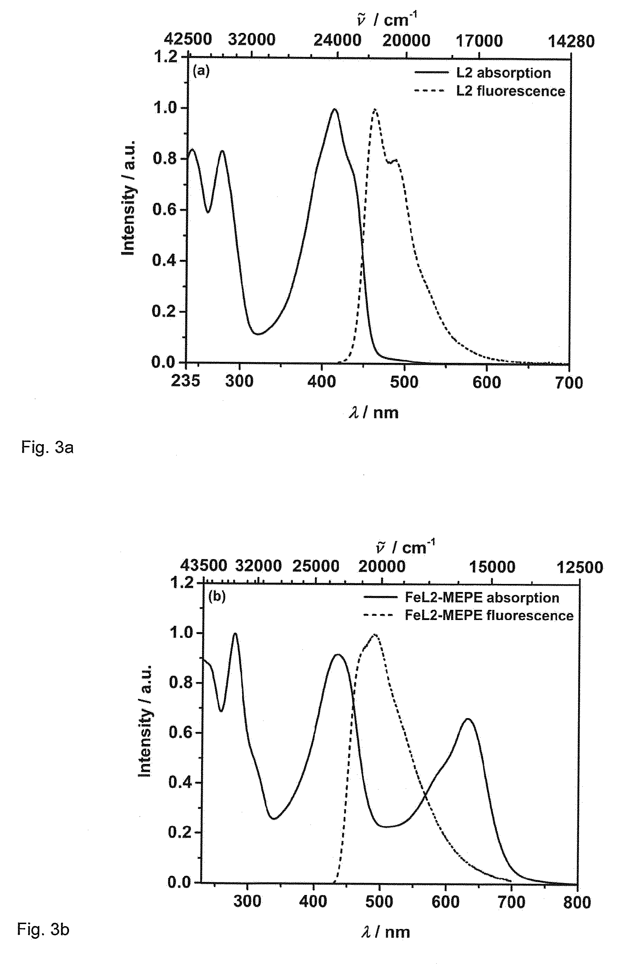

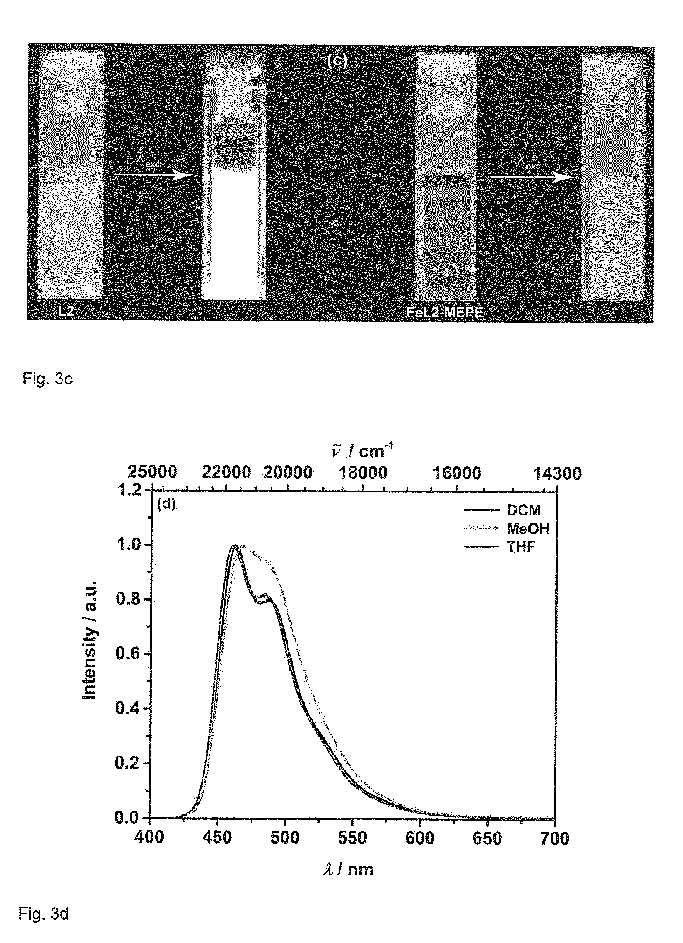

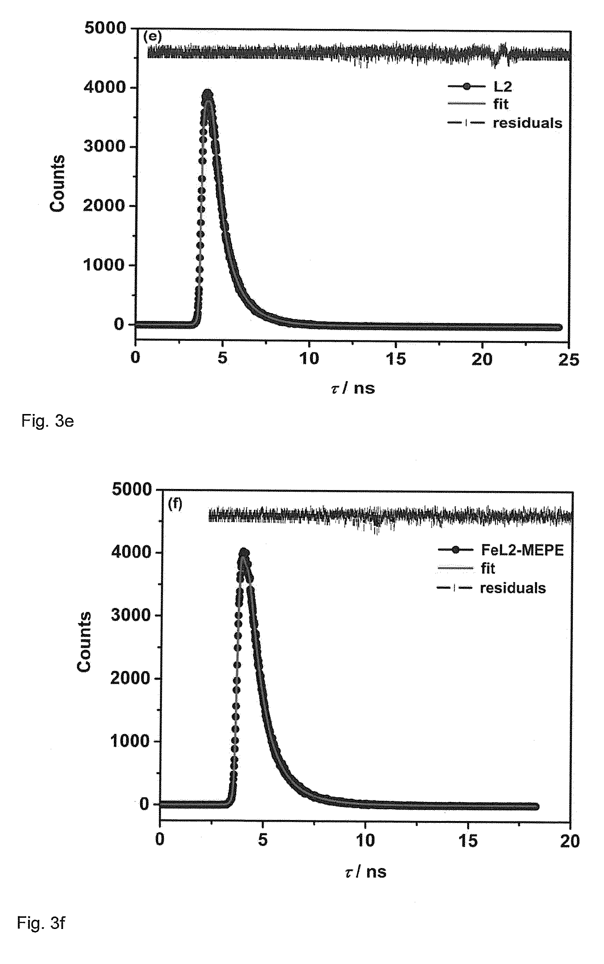

Fluorescence of ligand L2 and its MEPE was measured. L2 was dissolved in dichlormethane and FeL2-MEPE was dissolved in methanol. The fluorescence spectra are summarized in Figure 3 and the fluorescence data are summarized in Table 2.

**Table 2. Fluorescence data of L2 and FeL2-MEPE**

| entries | FL exci., *λ*ₘₐₓ [nm]; *v*[cm⁻¹] | FL emis., *λ*ₘₐₓ [nm]; *v*[cm⁻¹] | Stokes shift Δ*λ*ₘₐₓ [nm] | Φ_{f}*^{d}* | *T*[ns]^{e} |
|---|---|---|---|---|---|
| **L₂^{a}** | 413 (24 200) | 462 (21 600) | 49 | 0.82 | 0.44 (0.55) |
| | | | | | 1.15 (0.45) |
| | | | | | 0.07 (0.34) |
| **FeL₂-MEPE*^{b}*** | 420 (23 800) | 491 (20 400) | 57 | 0.04 | 0.59 (0.47) |
| | | | | | 1.32 (0.19) |
| **2,2'-bithiophene*^{c}*** | 302 (33 100) | 361 (27 700) | 59 | 0.02 | n.r. |

| | | | | | |
|---|---|---|---|---|---|
| *^{a}*Fluorescence values in DCM solvent. *^{b}*Fluorescence values in methanol solvent. *^{c}*Fluorescence data were obtained from reference 39. *^{d}*The absolute fluorescence quantum yield determined using an integrating sphere by Edinburgh Instruments FLS 980 in DCM and MeOH solvents for **L2** and **FeL2-MEPE,** respectively. *^{e}*The values in the brackets are the relative amplitudes of the corresponding fluorescence lifetime. n.r: not reported. | | | | | |

Ligand L2 showed a distinctive fluorescence due to the presence of a bithiophene linker, similarly to the previously published ditopic triazine ligand.

The fluorescence spectra of L2 (Figure 3a) showed a broad emission band with a maximum centered at 462 nm (∼21,645 cm⁻¹) with a Stokes' shift of 49 nm (*λ*_{exc} = 413 nm). This band was assigned to the emission from intraligand *π-π** transition.

For comparison, 2,2'-bithiophene showed an emission at 361 nm (see Table 2) indicating an influence of 2,6-bis(2-pyridyl)pyrimidine (BPP) on the optical properties.

Furthermore, the effect of solvents on the fluorescence properties of the ligand were studied. When polar solvents like DCM and THF were used, the fluorescence spectra of L2 showed a similar pattern. When protic methanol was used, the emission band was slightly broader and featureless, most likely due to its ability for hydrogen bond formation (Figure 3d). Upon excitation (*λ*_{exc} = 420 nm) FeL2-MEPE showed an intense and broad fluorescence band at 491 nm (∼20,400 cm⁻¹) in methanol with an apparent Stokes' shift of 57 nm (2,675 cm⁻¹) (see Figure 3b).

The absolute fluorescence quantum yield of L2 is 82% (Φ_{f} = 0.82) which was very high compared to 2,2'-bithiophene (Φ_{f} = 0.02) (Table 2). It is assumed that the increase of quantum yield is due to the presence of a BPP unit in the ligand. When comparing the data for the ligand and the absolute quantum yield of FeL2-MEPE, a significant drop in its Φ_{f} value to 4% (Φ_{f} = 0.04) was seen. This confirms results that have been reported earlier for Fe(II) quenching, either due to a metal ion complexation and/or an increase of the intermolecular *π-π* stacking among the polymer chains.

Decay profiles of the fluorescence properties of ligand and Fe^{II}-MEPE were measured in a nanosecond time regime with a single-photon counting PMT technique at an excitation wavelength of 413 nm for L2 (Figure 3e) and 420 nm for FeL2-MEPE (Figure 3f), respectively, using a picosecond laser diode as an exciter. Ligand L2 shows a biexponential decay with lifetimes of -1.15 and 0.44 ns (Table 2). Upon analysis of the biexponential decays, an increase in relative amplitude of the shorter component was observed. The lifetime is slightly higher than those of the previously reported BTPY ligands. On the other hand, the corresponding FeL2-MEPE showed a tri-exponential decay with lifetimes of -1.32, 0.59, and 0.07 ns.

### EXAMPLE 3

### Viscosity of MEPE solutions

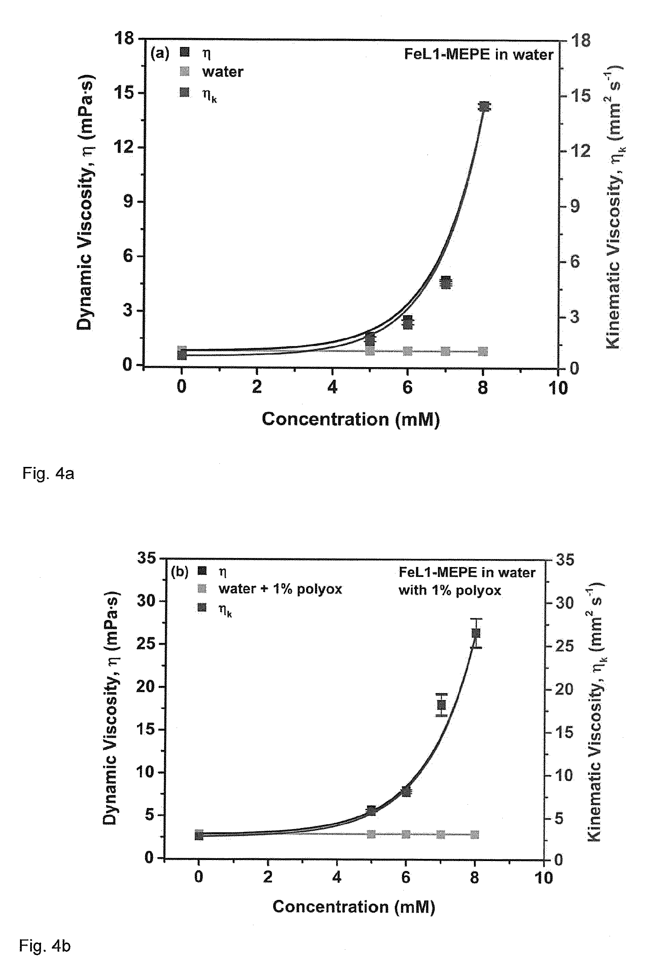

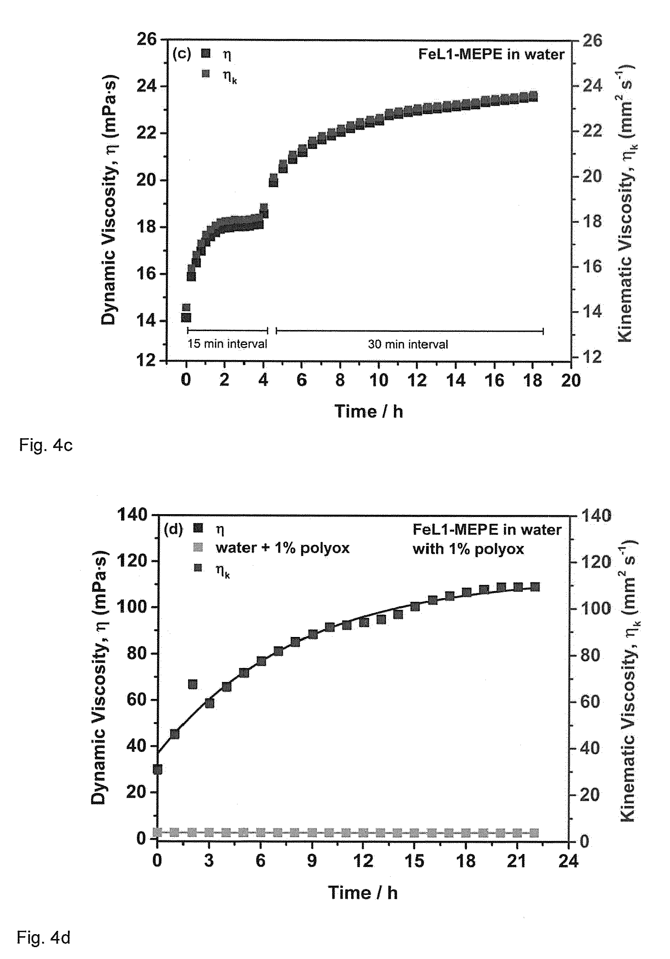

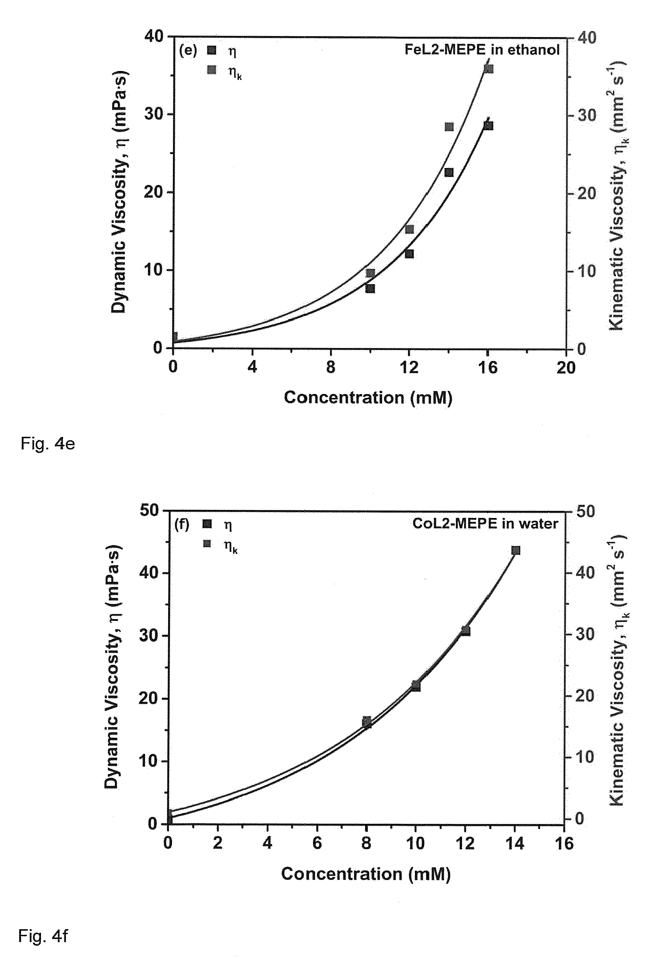

One favorable property of the MEPEs of the present invention is their solubility in an aqueous medium and the forming of structures within the aqueous medium. To show these favorable properties some experiments were made. Viscosity properties reveal the details about a macromolecular nature of MEPEs in solution and play a crucial role for the fabrication of thin films by wet-chemical coating procedures. Moreover, as viscosity is a function of chain length, it is a direct measure of the molecular weight of a compound. The four MEPEs prepared in Example 1 were used to analyze the dynamic and kinematic viscosity as a function of concentration in water and ethanol, respectively (see also Figure 4).

As can be seen in Figure 4, a high viscosity in water can be obtained with the MEPEs of the present invention.

The increasing viscosity behavior of the MEPE can be conclusively attributed to the high molecular mass that can be obtained when using the ligands of the present invention. This is shown in Table 3.

**Table 3. Molecular parameters for FeL₁₋, FeL₂-, and CoL2-MEPE from static light scattering (SLS)**

| MEPEs | ***M̅***_{w}[g/mol]*^{c}* | *R*_{g} [nm]*^{d}* | *R*ₕ [nm]*^{e}* | *A*₂ [mol·L g⁻²]*^{f}* | *ρ^{g}* | *DP_{w}^{h}* |
|---|---|---|---|---|---|---|
| **FeL₁-MEPE*^{a}*** | 7.27 x 10⁸ | 168.20 | 267.38 | 0.62 x 10⁻⁹ | 0.63 | 10.14 x 10⁵ |
| **FeL₂-MEPE*^{b}*** | 29.97 x 10⁸ | 166.63 | 157.56 | 0.16 x 10⁻⁹ | 1.06 | 37.24 x 10⁵ |
| **CoL₂-MEPE*^{a}*** | 0.17 x 10⁸ | 154.33 | 242.49 | 26.86 x 10⁻⁹ | 0.64 | 0.21 x 10⁵ |

| | | | | | | |
|---|---|---|---|---|---|---|
| *^{a,b}*SLS data obtained in water and ethanol, respectively. *^{c}*weight average molar mass of MEPEs. *^{d}*radius of gyration. *^{e}*hydrodynamic radius. *^{f}*second virial coefficient. *^{g}*ratio of radii of gyration and hydrodynamic radii (*R*_{g}/*R*ₕ). *^{h}*weight average degree of polymerization | | | | | | |

Furthermore, the effect of a nonionic, high molecular weight water-soluble poly (ethylene oxide) polymer, having molecular weights in the range from 100,000 to about 8,000,000 (in the following "polyox"), commercially available as Polyox™ WSR N-80, on the viscosity of a FeL1 MEPE solution was analyzed. Poly(ethylene oxide) is known for its excellent film-forming characteristics, good electrochemical stability, and an excellent compatibility with lithium salts. Due to these properties the polymer was tested as polymer host in electrochromic devices. In the presence of 1% polyox, a solution of FeL1 MEPE showed almost a two-fold increase in viscosity with *η* = 26.47 ± 1.68 mPa·s at a concentration of 8 mM (Figure 4b). Apart from the viscosity of the polyox by itself, the additional interaction due to hydrogen bonding between the water molecules and the MEPE resulted in the enhanced increased viscosity. This was evident by the formation of gel by FeL1 MEPE in water (8 mM) when placed overnight at 20°C (Figure S3) (without polyox).

Next, time-dependent viscosity of **FeL1-MEPE** in water both in presence and absence of polyox at a concentration of 8 mM was investigated. Over a period of 18 h, the **FeL1-MEPE** displayed an increase in viscosity from 14 to 24 mPa·s in water (Figure 4c). However, viscosity showed a saturation behavior with *η* = 18 mPa·s, when measured in a time interval of 15 min but increased gradually to *η* = 24 mPa·s when the time interval was increased to 30 min. This result is important because it documents that the equilibration time is a crucial factor. Even if the individual bond formation between the metal ion and the ligand is fast, the large number of binding events in MEPEs require sufficient equilibration time to reach the full chain length. The addition of 1% polyox resulted in almost a four-fold increase of the viscosity from *η* = 30 to 110 mPa·s (Figure 4d).

Notably, the dynamic viscosity of **FeL1-MEPE** was significantly lower than that of **FeL2-MEPE** even at concentrations of 20 - 40 mM. The viscosity of **FeL1-MEPE** in ethanol (Figure S5 and Figure S4 in 75% acetic acid) reached only 3.3 mPa·s, whereas **FeL2-MEPE** lead to a viscosity of *η* = 29 mPa·s in ethanol (Figure 4e and Figure S6 in 75% acetic acid). Similarly, the viscosity of **CoL2-MEPE** in ethanol increased exponentially and reached 44 mPa·s at 14 mM (Figure 4f). Apparently, the presence of a bithiophene spacer significantly increased the interaction of **L2** with the metal ion. It is concluded that because of the ligand design, the assembly conditions and the choice of solvents it is possible to control the viscosity of a MEPE solution.

Static light scattering (SLS) technique provides a useful account of molar mass *M*_{w}, radius of gyration *R*_{g}, second virial coefficient *A*₂ of polymers and particles. The dynamic light scattering (DLS), on the other hand provides information about the size distribution (see for example Müller, A. et al. in Colloid Polym. Sci. 1995, 273, 866; Denkinger, P. et al. in Phys. Chem. 1989, 93, 1428; (52) Richtering, W.H. et al. in Phys. Chem. 1988, 92, 6032). Thus, the combination of static and dynamic light scattering method was used to investigate the dynamics, size, and architecture of **FeL1-, FeL2-** and **CoL2-MEPE** in solution. The light scattering experiments were performed at 23°C in diluted solutions of 1 - 5 mg·ml⁻¹. The data were evaluated by Guinier-Zimm plot as is known in the art.

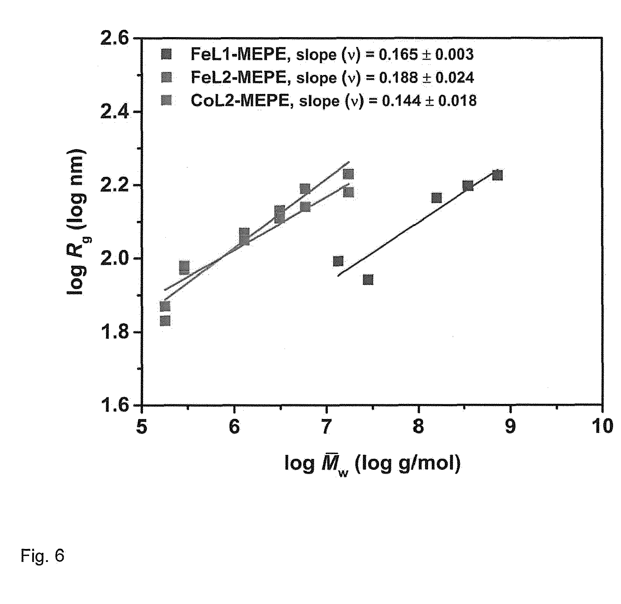

The weight average molar mass, *M̅*_{w}, of **FeL1-, FeL2-** and **CoL2-MEPE** as determined by SLS was found to be 7.3 x 10⁸, 30 x 10⁸ and 0.2 x 10⁸ g/mol, respectively (Table 3). The hydrodynamic radii of the MEPE chains amounted to 267, 157 and 242 nm. Assuming a linear MEPE chain, the weight average degree of polymerization (*DP*_{w}) for the **FeL1-, FeL2-**and **CoL2-MEPE**s was in the range of 10⁵. The second virial coefficient, *A*₂, provided an information about the interaction of MEPEs with the solvent. The experimentally determined values of *A*₂ > 0 indicate that the interaction between MEPEs and solvent molecules were favored over those among the MEPEs. Hence, the solvents (ethanol and water) under study can be referred to as "good solvent". Moreover, the high *DP*_{w} resulted in an increasing *M̅*_{w} and decreasing *A*₂, which is a common phenomenon in polymer chemistry. In other words, an increase in worm/coil-like structure is expected with increasing *M̅*_{w}. This is also evident from the p values obtained and is significant for **FeL2-MEPE.** Further, using the linearized equation 2, the dependence of *M̅*_{w} *vs. R*_{g} was shown in Figure 6 and resulted in the coefficient, v= 0.16 ± 0.01 for **FeL1-,** 0.18 ± 0.02 for **FeL2-,** and 0.14 ± 0.01 for **CoL2-MEPE.** This value was much lower compared to other polymers such as PEO most likely due to its high *M̅*_{w}(∼10⁸) and excluded volume effect.

### EXAMPLE 4

### Film forming properties and surface morphology

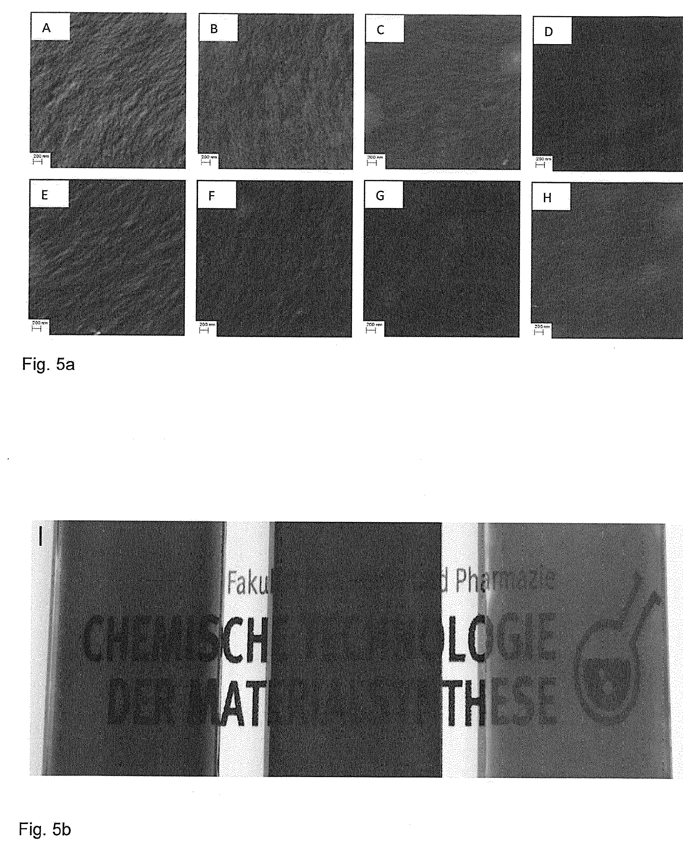

The ligands of the present invention were used to prepare MEPEs according to Example 1 which then were dissolved in ethanol and coated on ITO (indium tin oxide) coated glass substrate (1.6 cm x 2.5 cm). Ethanol was used for these experiments because it evaporates more quickly than water, but water can also be used. Films were prepared on the glass substrate by dip coating the substrate into the corresponding MEPE solution. The films and the surface morphology of the films then was analyzed. It was found that films produced on the substrates had very good optical properties. The effect of the withdrawing speed (50 and 100 mm·min⁻¹) and the concentration of the dipping solution (10, 12, 14, 16 mM) on the film properties were also studied, since these parameters affect to the film thickness according to the Landau-Levich equation The scanning electron microscopy images of FeL2-MEPE films (Figure 5) show a smooth homogeneous and defect-free surface. At lower concentrations, the images reveal fiber-like structures (Figure 5 - A, E) but the films evidently become smoother at higher concentrations. Nonetheless, the homogeneity of the films prepared at different withdrawing speed is retained. The UV-vis spectra of the fabricated thin films prepared from FeL1-, FeL2- and CoL2-MEPE were also measured. Both the FeL1-MEPE (ε_{644 nm} = 12 300 M⁻¹ cm⁻¹) and FeL2-MEPE (ε_{642 nm} = 25 700 M⁻¹ cm⁻¹) films revealed a red shift in the MLCT band (Figure S7 and S8) with a transmittance value of <10%.

### EXAMPLE 5

### Electrochemical and spectroelectrochemical properties

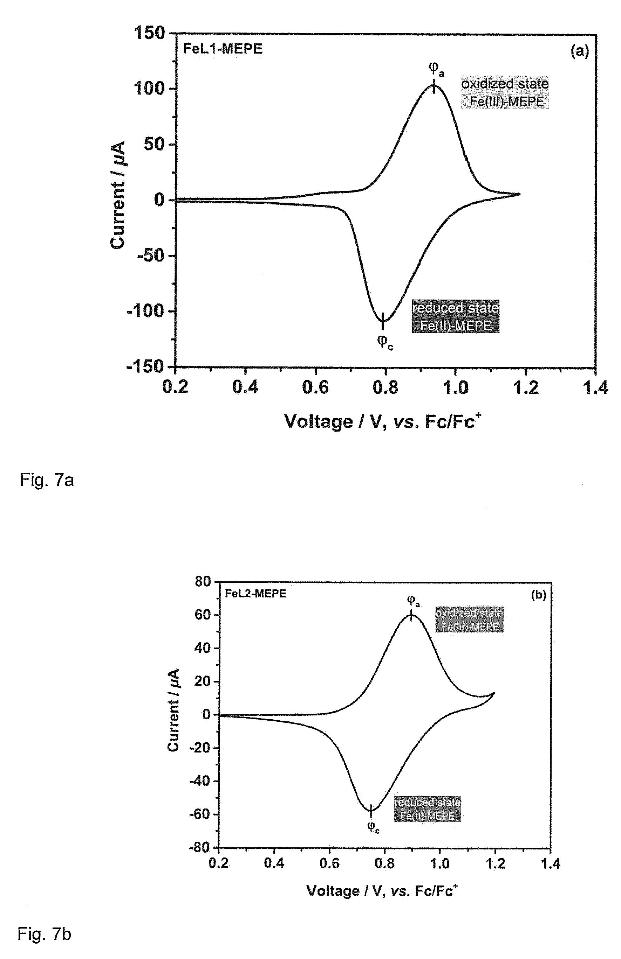

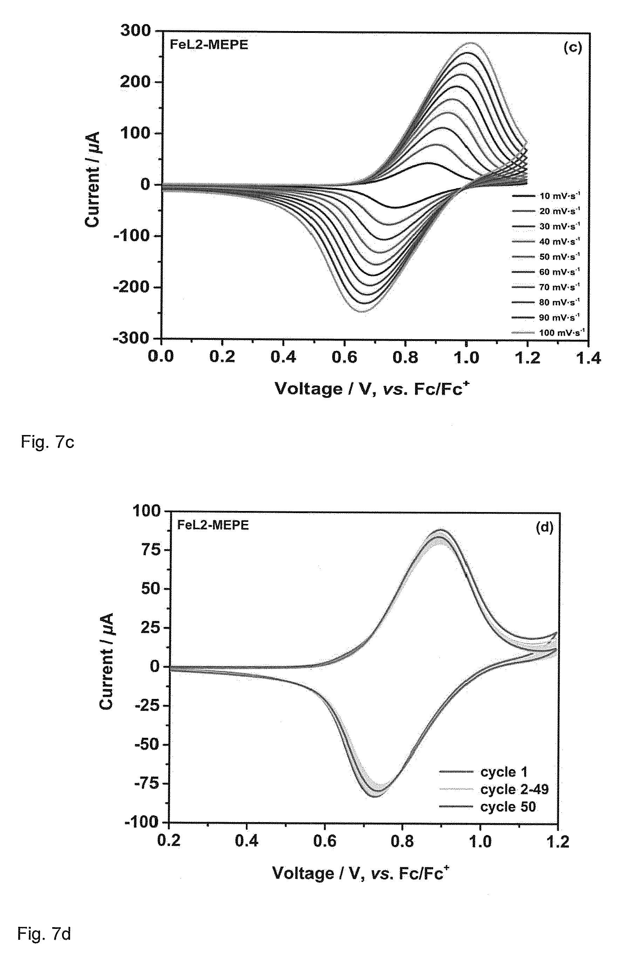

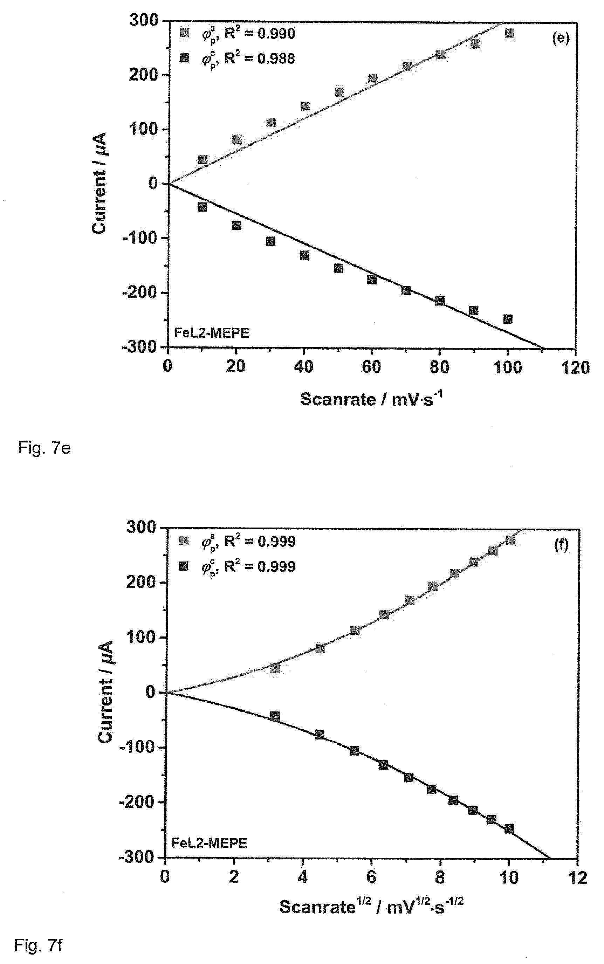

The electrochemical properties of the MEPEs were investigated by cyclic voltammetry. The MEPE coated ITO glass as the working electrode (WE) was measured vs. Ag/AgCl as the reference electrode (RE) against a Pt wire as the counter electrode (CE) in 0.2 M tetrabutylammoniumn hexafluorophosphate (TBAH) in dry dichloromethane. The cyclic voltammograms of the MEPEs are displayed in Figure 7 and its redox values are summarized in Table 4. The Fe^{II}-MEPEs exhibit a reversible redox reaction of the Fe^{II}/Fe^{III} couple at 0.86 and 0.82 V. There is no significant effect of the spacers (phenyl vs. bithiophene) in the redox potentials of FeL1- and FeL2-MEPE. The difference in the anodic and cathodic peak potentials, Δ*ϕ*ₚ, is 0.14 and 0.35 V for FeL1- and FeL2-MEPE, respectively. With an increase in scan rate, both the peak currents and Δ*ϕ*ₚ increase in a non-linear manner (Figure 7c, 7f and Figure S12, S13). In case of a reversible redox system, Δ*ϕ*ₚ is constant (57 mV·n⁻¹, n = number of electrons) and is independent on the scan rate (Nicholson, R. S.; Shain, I. Anal. Chem. 1964, 36, 706). However, the ratio of the anodic to cathodic peak currents, *i*ₐ/*i*_{c}, is approximately 1 indicating a close to reversible redox couple. Hence, it is assumed that the equilibration between the oxidized and reduced species in the MEPE film is slowed down and also scan rate dependent consistent with quasi-reversible redox reactions in thin films. EC materials should possess a good redox cycle stability under switching conditions. The CVs of the Fe-MEPE films on ITO coated glass were monitored over 50 redox cycles (Figure 7d and Figure S14). Although, a slight change in the initial CV envelop was observed, indicating a formation process, the CV envelop remained unchanged throughout.

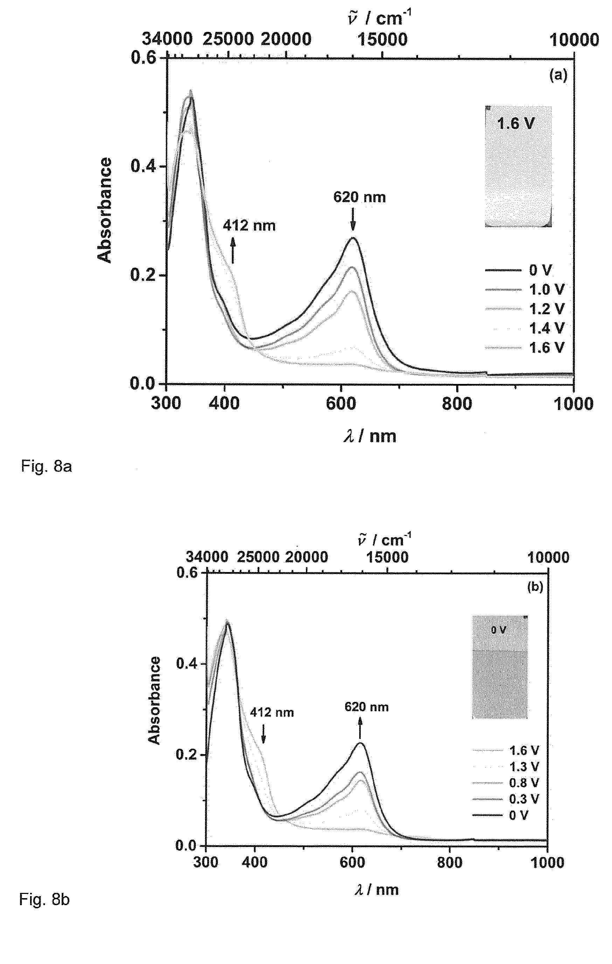

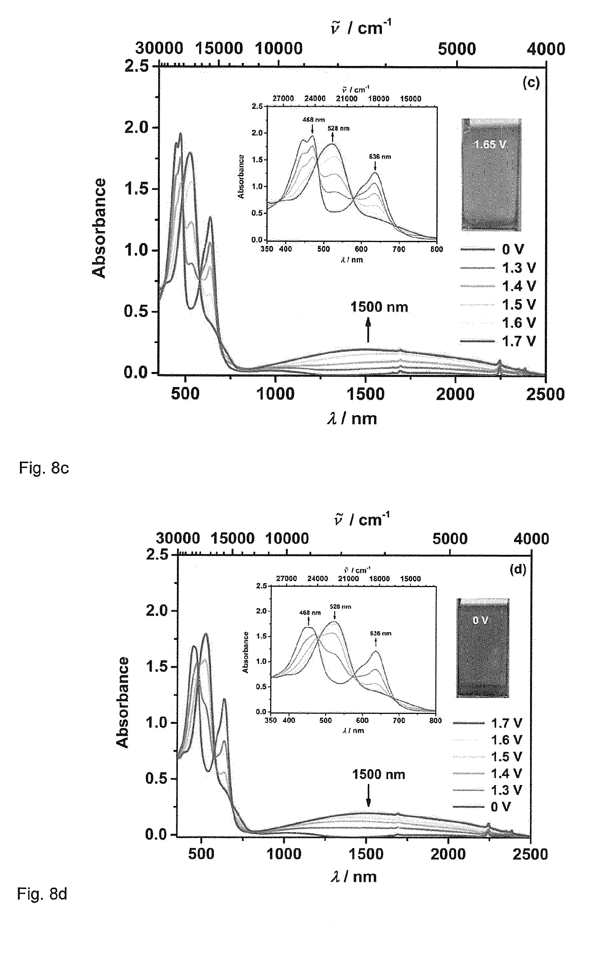

The electrochromic nature and the switching process of the MEPEs was examined by monitoring the absorbance change (*λ*ₘₐₓ) in the visible wavelengths as a function of applied potential. The in-situ spectroelectrochemical measurements were performed by using a potentiostat with a Pt wire as a counter electrode and 0.2 M TBAH in anhydrous dichloromethane as an electrolyte, in a two-electrode experiment. Upon stepping the potential from 0.0 to +1.6 V, the absorbance of the MLCT band of FeL1-MEPE (Figure 8a) at 620 nm decreased and almost disappeared (Fe^{II} → Fe^{III}). Subsequently stepping back the potential results in the recovery of the MLCT band (Figure 8b). The recovery of the MLCT band was slightly slower, most likely due to the memory effect of the Fe-MEPE layers and was also observed in previously reported MEPE films (Schott, M.; Szczerba, W.; Kurth, D. G. Langmuir 2014, 30, 10721). Similarly, the MLCT band of FeL2-MEPE at 636 nm completely disappears upon increasing the voltage incrementally, while two new bands appeared at ca. 530 nm and 1500 nm (Figure 8c). The broad intense band at 530 nm was assigned to the red shifted *π-π** transition of the bithiophene ligand together with the hidden d-d transition. The less intense band at ca. 1500 nm was assigned to the low energy ligand-to-metal charge transfer (LMCT) transition originating due to the charge delocalization in the bithiophene chain resulting in the energy level of the thiophene donor to lie close to the Fe^{III} acceptor upon oxidation. Such behavior has been reported in ferrocene-thiophene based monomers, which are commonly known for enhancing charge-transfer (CT) states (see for example Tan, L. et al. in Macromolecules 2002, 35, 4628; Caballero, A. et al. in Dalton Trans. 2006, 1390; Poppitz, E. A. et al. in Anorg. Allg. Chem. 2014, 640, 2809). In addition, the recovery of the MLCT band showed no loss in the absorption value indicating good reversibility of FeL2-MEPE (Figure 8d).

**Table 4. Electrochemical properties of FeL1-, and FeL2-MEPE^{a}**

| MEPEs | *E*_{oxid}. [V] | *E*_{red.} [V] | *E*_{1/2} [V]*^{b}* |
|---|---|---|---|
| **FeL₁- MEPE** | 0.93 | 0.79 | 0.86 |
| **FeL₂- MEPE** | 1.00 | 0.65 | 0.82 |

| | | | |
|---|---|---|---|
| *^{a}*Cyclic voltammograms recorded from thin films coated on an ITO glass at room temperature in an electrolyte solution of 0.2 M TBAH in anhydrous dichloromethane using platinum wire as counter electrode, and Ag/AgCl as a reference electrode. Scan rate: 100 mV·s⁻¹ *^{b}E*_{1/2} = 0.5(*E*_{oxid.} + *E*_{red.}), where *E*_{oxid.} and *E*_{red}. are the oxidation and reduction peak potentials, respectively. The potentials are referenced with respect to ferrocene (Fc) as a standard. | | | |

## Claims

1. Ligand comprising a spacer and two tridentate groups having structural formula I:
T¹-B- T²
wherein B is a bond or a linear linking unit (L)ₘ, wherein L is C₁-C₁₀-alkyl,, C₁-C₁₀-alkenyl, C₁-C₁₀-alkynyl, or alkyl ether or alkyl ester having 1 to 10 carbon atoms, C₆-C₁₂-aryl or 5- or 6-membered heteroaryl;
m is an integer of 1-4;
T¹ is a group of group of the following formula IIa and 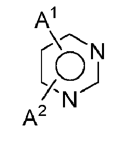
T² is a group of the following formula IIb 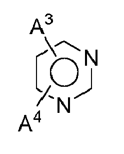
wherein T¹ and T² are the same or different and wherein
A¹, A², A³, and A⁴ are independently 5- or 6-membered N-heteroaromatic rings, wherein said rings are unsubstituted or substituted by C₁-C₄ alkyl, OH, C₁-C₄ alkoxy, sulfanyl, NR₂, wherein R independently is hydrogen or C₁-C₄ alkyl; halogen, aryl or heteroaryl.

2. Ligand according to claim 1, wherein L is phenyl, acetylene, thiophene, or glycol.

3. Ligand according to claim 1 or claim 2, wherein A¹, A², A³, and/or A⁴ independently are unsubstituted or substituted pyridyl.

4. Electrochromic unit comprising a ligand of one of claims 1 to 3 and a metal ion.

5. Electrochromic unit according to claim 4 represented by the following structure: 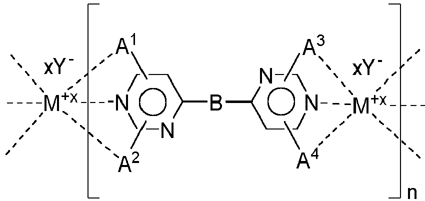
wherein B is a bond or a linear linking unit (L)ₘ, wherein L is C₁-C₁₀-alkyl,, C₁-C₁₀-alkenyl, C₁-C₁₀-alkynyl, or alkyl ether or alkyl ester having 1 to 10 carbon atoms, C₆-C₁₂-aryl or 5- or 6-membered heteroaryl;
A¹, A², A³, and A⁴ are independently 5- or 6-membered N-heteroaromatic rings, wherein said rings are unsubstituted or substituted by C₁-C₄ alkyl, hydroxyl, methoxy, sulfanyl, amino or halogen and wherein an N-heteroaromatic ring comprises at least one nitrogen atom and can additionally contain 1 to 3 heteroatoms selected from the group consisting of O, S and N;
M is Fe, Co, Ni, Cr, Mo, Pt, Zn, Cu, W, Mn, V, Ru, Os, La, or a lanthanoid,
m is 1 to 4;
n is at least 1;
x is the valence of the metal and is 1 to 4;
Y is a counter ion.

6. Electrochromic unit according to any one of claims 4 or 5, wherein L is phenyl, acetylene, thiophene, bi-thiophene or glycol, and/or wherein M is Fe or Co.

7. Electrochromic unit according to any one of claims 4 -6, selected from 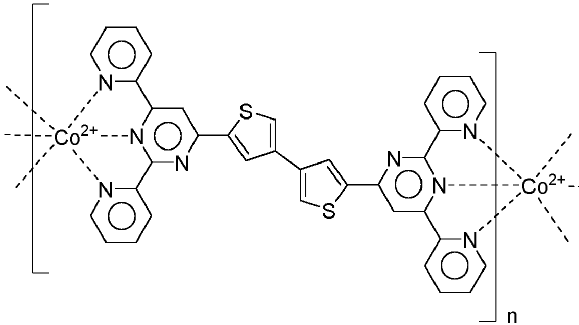 or 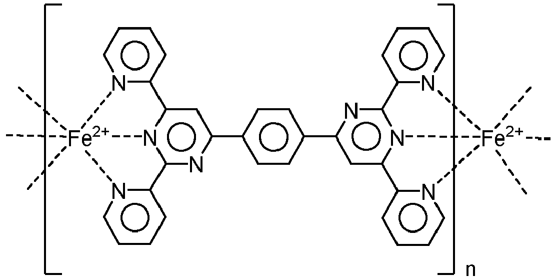 or 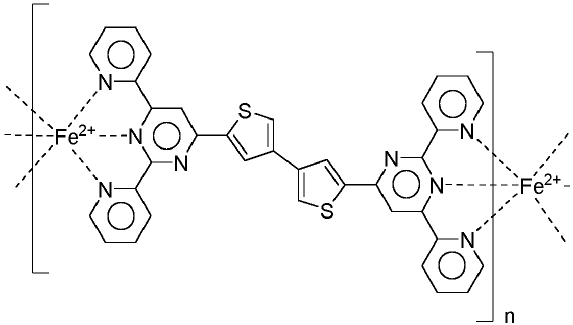 wherein n is at least 1.

8. Electrochromic metallo-polymer comprising at least one ligand as defined in one of claims 1-3.

9. Electrochromic metallo-polymer comprising at least one electrochromic unit as defined in one of claims 4-8.

10. Electrochromic metallo-polymer as defined in one of claims 8 or 9, wherein the molecular mass of the polymer is 10³ to 10¹² g mol⁻¹, preferably 10⁵ to 10¹⁰ g mol⁻¹ and more preferably 10⁶ to 10⁹ g mol⁻¹.

11. Electrochromic component comprising at least one electrochromic unit as defined in one of claims 4-8 or at least one electrochromic metallo-polymer as defined in one of claims 8-10.

12. Electrochromic component according to claim 11, comprising substrate, ion storage layer, electrochromic metallo-polymer of one of claims 8-10, and electrolyte.

13. Use of an electrochromic metallo-polymer for coating glass or a transparent polymer or for coating a surface on a building.

14. Use of an electrochromic metallo-polymer according to claim 13, wherein the substrate is a mirror or a display.
